# FASCICULE DE BREVET EUROPEEN

(11) **EP 3 676 487 B1**
(45) Date de publication et mention de la délivrance du brevet: **25.08.2021**
(21) Numéro de dépôt: 18779415.1
(22) Date de dépôt: 27.08.2018
(51) Int. Cl.: F02K 9/46, F02K 9/56, F02K 9/80

(54) **PROCEDE DE GESTION DE LA POUSSEE D'UN MOTEUR-FUSEE, PROGRAMME D'ORDINATEUR ET SUPPORT D'ENREGISTREMENT POUR LA MISE EN OEUVRE DE CE PROCEDE, DISPOSITIF DE COMMANDE POUR MOTEUR-FUSEE, ET MOTEUR-FUSEE COMPRENANT CE DISPOSITIF DE COMMANDE**
VERFAHREN ZUR VERWALTUNG DES SCHUBS EINES RAKETENTRIEBWERKS, COMPUTERPROGRAMM UND AUFZEICHNUNGSMEDIUM ZUR IMPLEMENTIERUNG DES BESAGTEN VERFAHRENS, STEUERUNGSVORRICHTUNG FÜR EIN RAKETENTRIEBWERK UND RAKETENTRIEBWERK MIT BESAGTER STEUERUNGSVORRICHTUNG
METHOD FOR MANAGING THE THRUST OF A ROCKET ENGINE, COMPUTER PROGRAM AND RECORDING MEDIUM FOR IMPLEMENTING SAID METHOD, CONTROL DEVICE FOR A ROCKET ENGINE, AND ROCKET ENGINE COMPRISING SAID CONTROL DEVICE

(30) Priorité: 29.08.2017 FR 1757960
(43) Date de publication de la demande: 08.07.2020
(73) Titulaire: ArianeGroup SAS, 75015 Paris (FR)
(72) Inventeur: LE GONIDEC, Serge Daniel, 27200 Vernon (FR); BARTHOULOT, Jean-Luc, 27510 Vexin Sur Epte (FR)
(74) Mandataire: Cabinet Beau de Loménie
(86) Numéro de dépôt international: PCT/FR2018/052108
(87) Numéro de publication internationale: WO 2019/043326

(56) Documents cités:
- FR-A1- 2 991 391
- FR-A1- 3 000 996
- US-B1- 6 457 306

## Description

Procédé de gestion de la poussée d'un moteur-fusée, programme d'ordinateur et support d'enregistrement pour la mise en œuvre de ce procédé, dispositif de commande pour moteur-fusée, et moteur-fusée comprenant ce dispositif de commande.

### DOMAINE DE L'INVENTION

L'invention concerne les moteurs-fusées du type comprenant une chambre de combustion, deux circuits d'alimentation en ergols pour alimenter en ergols la chambre de combustion, deux pompes disposées respectivement sur les deux circuits d'alimentation en ergols, l'une au moins étant une pompe électrique, et une alimentation électrique ; ladite au moins une pompe électrique étant configurée pour être alimentée en électricité par l'alimentation électrique.

Une pompe électrique est une pompe comprenant une partie fluidique de pompage de fluide et un moteur électrique pour actionner la partie fluidique de pompage de fluide. Dans certains cas, le moteur électrique peut être commun à plusieurs pompes, c'est-à-dire qu'il actionne plusieurs parties fluidiques dont les circuits de fluide sont isolés les uns des autres.

L'invention concerne un procédé de gestion de l'énergie électrique dans de tels moteurs-fusées, un programme pour la mise en œuvre de ce procédé, un support d'enregistrement pour un tel programme, un dispositif de commande pour un moteur-fusée, visant à optimiser la gestion de la poussée dans le moteur, et un moteur-fusée.

### ARRIÈRE-PLAN DE L'INVENTION

L'électricité consommée par les différents organes électriques d'un moteur-fusée est généralement assurée par une alimentation électrique (c'est-à-dire une source d'énergie électrique) telle que des batteries, une pile à combustible, ou autre. Un exemple de moteur-fusée dont certains organes sont alimentés par une alimentation électrique est divulgué par le document US 6 457 306.

Quel que soit le type d'alimentation électrique, la puissance ainsi que la quantité d'énergie que celle-ci a la capacité de fournir sont limitées.

Bien que cette limitation soit bien sûr connue et prise en compte, cela ne couvre pas cependant certains aléas, comme une augmentation soudaine de la puissance nécessaire à transmettre aux moteurs électriques pour permettre le fonctionnement des pompes d'alimentation et donc du moteur-fusée, ou encore inversement pour couvrir une perte prématurée de la quantité d'énergie résiduelle.

En l'absence de prise en compte de ces aléas, le dispositif de commande du moteur-fusée peut donc dans certains cas générer des commandes que le moteur-fusée ne peut réaliser. Cela peut conduire notamment à un échec, ou du moins à des difficultés suite à un manque d'énergie électrique, ce qui peut être critique en particulier dans la réalisation d'une mission spatiale.

### PRESENTATION DE L'INVENTION

Un objectif de la présente invention est de remédier à cette difficulté et de proposer un procédé de gestion de la poussée pendant une phase de fonctionnement d'un moteur-fusée du type présenté en introduction, qui permette l'exploitation de ce moteur-fusée en minimisant le risque qu'au cours d'une mission le dispositif de commande moteur ne puisse assurer le fonctionnement du moteur-fusée, faute d'une puissance électrique disponible suffisante.

Cet objectif peut être atteint, selon l'invention, de deux manières différentes, selon l'importance que l'on attribue au risque de manque de puissance électrique.

Selon un premier aspect de l'invention, dans un moteur-fusée du type présenté en introduction, l'objectif indiqué précédemment est atteint grâce à un procédé de gestion de la poussée pendant une phase de fonctionnement du moteur-fusée qui comprend les étapes suivantes :
(S10) on calcule une consigne initiale de poussée pour le moteur (PGCc ᵢₙᵢ) ;
(S20) on calcule une consigne initiale de poussée maximale (PGCc_{max ini}) souhaitée pour le moteur ;
(S30) on calcule une consigne effective de poussée maximale (PGCc_{max e}) définissant une poussée maximale que l'on attend du moteur compte tenu d'au moins une limitation de l'alimentation électrique en réalisant au moins l'un de deux groupes d'opérations ;
(S40) à partir de la consigne initiale de poussée (PGCc ᵢₙᵢ), on calcule une consigne de poussée filtrée (PGCc _{f}) pour le moteur de telle sorte que la consigne de poussée filtrée (PGCc _{f}) soit inférieure ou égale à la consigne effective de poussée maximale (PGCc_{max e}) ;
le premier des deux groupes d'opérations comprenant les opérations suivantes :
   (S31) on fixe une valeur-seuil de puissance instantanée (PI_{s max}) à une valeur strictement inférieure à une puissance électrique maximale (PIₘₐₓ) susceptible d'être délivrée par l'alimentation électrique ;
   (S32) on compare une puissance électrique instantanée (PI) consommée par les pompes à ladite valeur-seuil de puissance instantanée (PI_{s max}), et,
   (S33) si la puissance électrique (PI) consommée par les pompes dépasse ladite valeur-seuil de puissance instantanée (PI_{s max}), on fixe la consigne effective de poussée maximale (PGCc_{max e}) à une valeur strictement inférieure à la ladite consigne initiale de poussée maximale (PGCc_{max ini}) ; et
   le deuxième des deux groupes d'opérations comprenant les opérations suivantes :
   (S35) on calcule une quantité prévisionnelle d'énergie électrique consommée (En_{cons prev}), égale à une quantité cumulée d'énergie électrique qu'il est nécessaire de fournir aux pompes pour réaliser un profil prévisionnel de poussée prévu pour le moteur fusée ;
   (S36) on calcule une valeur-seuil d'énergie stockée (EN_{s sto}) fonction d'une quantité d'énergie (Enₛₜₒ) stockée dans l'alimentation électrique (104) ;
   (S37) on compare la quantité prévisionnelle d'énergie électrique consommée (En_{cons prev}) à la valeur-seuil d'énergie stockée (EN_{s sto}) ;
   (S38) si l'on détecte que la quantité prévisionnelle d'énergie électrique consommée (En_{cons prev}) est supérieure à la valeur-seuil d'énergie stockée (EN_{s sto}), on fixe la consigne effective de poussée maximale (PGCc_{max e}) à une valeur strictement inférieure à la ladite consigne initiale de poussée maximale (PGCc_{max ini}).

Dans la définition précédente et dans la suite du présent document, le terme 'poussée' désigne la force de poussée du moteur (exprimée en Newton). Cependant, ce paramètre de poussée doit être compris de manière large, et inclut également tout paramètre directement relié à la force de poussée du moteur. Par exemple, le paramètre de poussée peut être constitué par le paramètre de pression des gaz de combustion, comme dans les exemples de mise en œuvre de l'invention décrits plus loin. Le paramètre de poussée peut aussi être composé par les débits des deux ergols consommés par le moteur.

Ainsi, la réduction de la consigne de poussée réalisée à l'étape S40 peut être réalisée en diminuant dans une même proportion les quantités d'ergols consommées par le moteur, ou encore en faisant varier le rapport de mélange des ergols, etc.

L'expression « énergie électrique consommée par les pompes » désigne naturellement l'énergie électrique consommée par le ou les moteurs électriques des pompes.

Par ailleurs, dans le cas où une seule pompe consomme de l'énergie électrique, l'expression « énergie électrique consommée par les pompes » désigne l'énergie électrique consommée par cette pompe.

Le procédé défini ci-dessus comporte tout d'abord une étape S10, connue en elle-même, de calcul d'une consigne initiale de poussée pour le moteur. Il s'agit là de calculer la poussée attendue du moteur, à l'instant considéré, en prenant en compte un certain nombre de limitations fonctionnelles, et en prenant en compte également le programme de vol prévu pour l'engin sur lequel le moteur est monté.

A l'étape S20, on calcule une valeur initiale PCGc _{max ini} qui indique la poussée maximale PCGc ₘₐₓ que le moteur ne doit pas dépasser. Il s'agit d'une première valeur de la poussée maximale du moteur, que l'on calcule à ce stade sans prendre en compte les limitations éventuelles d'alimentation électrique du moteur.

A l'étape S30, on calcule la consigne effective de poussée maximale (PGCc_{max e}). Cette valeur est calculée à partir de la valeur initiale PCGc _{max ini} de poussée maximale du moteur, mais cette fois en prenant en compte les limitations de l'alimentation électrique du moteur.

Suivant l'invention, ces limitations sont prises en compte de deux manières :
- en prenant en compte la limite de puissance instantanée que peut fournir l'alimentation électrique : ces limitations sont prises en compte en réalisant le premier groupe d'opérations à l'étape S30 ; et/ou
- en prenant en compte la limite quant à l'énergie disponible dans l'alimentation électrique qui peut être consommée par le moteur-fusée : ces limitations sont prises en compte en réalisant le deuxième premier groupe d'opérations à l'étape S30.

Ensuite, à l'étape S40, à partir de la consigne initiale de poussée (PGCc ini), on calcule la consigne de poussée filtrée PGCc _{f} de telle sorte que la consigne de poussée filtrée PGCc _{f} soit inférieure ou égale à la consigne effective de poussée maximale PGCc_{max e}.

La consigne de poussée filtrée PGCc _{f} qu'elle fournit est la valeur prévue pour permettre un calcul de la ou des commandes transmises à la ou aux pompe(s) électrique(s). Cette ou ces commandes seront donc calculées à partir de la consigne de poussée filtrée PGCc _{f}.

Cette consigne de poussée filtrée PGCc _{f} est normalement utilisée au cours d'une étape de calcul ultérieure durant laquelle on détermine la ou les vitesses de rotation des moteurs de la pompe ou des pompes électrique(s) de telle sorte que la poussée effective du moteur-fusée soit égale à la consigne de poussée. Ces vitesses permettent alors de calculer la ou les intensités de courant à fournir aux moteurs électriques de la ou des pompes électriques.

Cette ou ces valeurs d'intensité sont alors généralement (en fonction de la configuration du moteur-fusée) transmises aux contrôleurs respectivement du ou des moteurs de la pompe d'alimentation électrique ou des deux pompes d'alimentation électriques, afin d'assurer son ou leur alimentation en courant électrique.

Pour simplifier, dans ce qui suit et dans les figures associées, l'invention va maintenant être décrite en faisant éventuellement référence à deux pompes électriques (plutôt qu'une seule). Cependant, malgré cette présentation il convient de noter que l'invention et ses différents perfectionnements peuvent parfaitement être appliqués à un moteur-fusée ne comprenant qu'une seule pompe électrique, *mutatis mutandis.*

Dans ce premier aspect de l'invention, les limitations de l'alimentation électrique du moteur sont prises en compte de manière conditionnelle, puisqu'elles ne sont prises en compte que pour modifier une limitation fonctionnelle du moteur, à savoir la poussée maximale du moteur.

Ainsi, le procédé proposé ne réduit la poussée du moteur que pendant les phases de fonctionnement dans lesquelles la poussée est particulièrement forte. Avantageusement, cette manière sélective de réduire la poussée permet d'optimiser l'utilisation de l'énergie par le moteur.

D'autre part, le procédé proposé avantageusement permet de prendre en compte deux formes de limitation de l'alimentation électrique du moteur.

Tout d'abord, grâce au premier groupe d'opérations de l'étape S30, qui sert à calculer la consigne effective de poussée maximale (PGCc_{max e}), le procédé apporte une fonction de maîtrise de la puissance électrique instantanée.

Avantageusement, cette fonction permet d'assurer qu'au cas où la puissance électrique instantanée consommée par les pompes devient trop importante, ce qui se traduit par le dépassement de la première valeur-seuil PI_{s max}, on diminue la consigne maximale de poussée, ce qui a pour effet de diminuer la puissance électrique maximale susceptible d'être demandée par les pompes et ainsi, d'éviter que la puissance électrique nécessaire au fonctionnement des pompes électriques ne dépasse la puissance électrique disponible.

Cette limitation de la demande de puissance électrique permet d'éviter une situation dans laquelle la demande de puissance électrique excéderait la puissance électrique pouvant être délivrée par la source de puissance électrique embarquée. La valeur-seuil de puissance instantanée peut par exemple être fixée à une valeur égale à une fraction de la puissance électrique susceptible d'être délivrée par l'alimentation électrique, par exemple 80% ou 90% de celle-ci.

Par ailleurs, lorsque le deuxième groupe d'opérations de l'étape S30 est réalisé pour calculer la consigne effective de poussée maximale PGCc_{max e}, le procédé apporte une fonction de maîtrise de l'énergie stockée. Avantageusement, cette fonction permet d'assurer que la consommation d'énergie électrique électrique prévue pour le moteur (suivant un programme de vol prévu) reste inférieure à la quantité totale d'énergie pouvant être consommée par le moteur.

Ce perfectionnement concerne le cas où l'on réalise une gestion prévisionnelle du vol, et vise à assurer alors une gestion prévisionnelle de la puissance électrique pendant le vol.

On est donc dans le cas où un programme de vol du moteur, et par suite un profil prévisionnel de poussée du moteur, ont été établis.

Si un tel programme prévisionnel de poussée moteur est disponible, dans un mode de mise en œuvre l'étape S30 comprend les étapes S35, S36, S37 et S38 indiquées précédemment.

La valeur-seuil d'énergie stockée peut être choisie simplement égale à la quantité d'énergie stockée. Cependant, par précaution on peut choisir une valeur-seuil plus basse, par exemple égale à 80% ou 90% de la quantité d'énergie stockée.

Les étapes S35, S36, S37 et S38 permettent d'ajouter une fonction de sécurité assurant la maîtrise de l'énergie stockée. L'efficacité de cette fonction est liée au fait que la puissance électrique consommée par les pompes ne croît pas de manière linéaire (par rapport à la poussée du moteur), mais croît comme le carré, voire le cube de la poussée.

Le fait de réduire la puissance électrique maximale que l'on peut fournir aux pompes a pour conséquence de réduire la poussée du moteur (en raison de l'étape S38) pendant les phases pendant lesquelles cette poussée est particulièrement grande.

Par suite, cette fonction peut permettre avantageusement d'atteindre une vitesse finale souhaitée, en opérant le moteur avec une poussée réduite, alors que réaliser le vol avec le programme de vol initial (et notamment le programme prévisionnel de poussée moteur initial) n'aurait pas permis d'atteindre la position et/ou la vitesse finale(s) souhaitée(s), par manque d'énergie.

En d'autres termes, cette fonction conduit à limiter la puissance instantanée pour maximiser les chances d'assurer la mission avec une poussée réduite mais sur une durée plus longue : en réduisant la poussée, bien que la durée du vol dure plus longtemps, il est possible d'atteindre la même valeur de vitesse (ou d'énergie cinétique) tout en consommant au final moins d'énergie électrique. Dans le cas où le moteur-fusée sert au lancement d'un satellite, la conséquence est que l'énergie cinétique attendue pour l'éjection du satellite ne peut s'effectuer qu'à un instant postérieur à l'instant prévu initialement. Cependant, pour une quantité significative de missions de lancement, cela n'a pas de conséquence sur l'objectif.

Le procédé de gestion de la poussée du moteur selon l'invention permet de faire face efficacement à divers incidents susceptibles de survenir dans le moteur, tels que par exemple la perte d'une batterie ou d'un élément de batterie (notamment lorsque l'on décide d'isoler celle-ci ou celui-ci suite à une défaillance), un besoin de puissance nécessaire pour actionner les pompes, du fait d'une perte de rendement sur une de celles-ci, d'une obstruction d'un conduit d'alimentation, etc.

Dans certains modes de mise en œuvre, la consigne effective de poussée maximale est fixée à une valeur strictement inférieure à la consigne initiale de poussée maximale en prenant en compte à la fois les deux conditions correspondant au premier et au deuxième groupe d'opérations.

Dans ce cas, la consigne effective de poussée maximale est réduite par rapport à la consigne initiale de poussée maximale pour prendre en compte d'une part la limitation liée à la quantité d'énergie stockée (deuxième groupe d'opérations, étapes S35,S37,S38), d'autre part la limitation liée à la puissance électrique instantanée consommée (à l'instant considéré) (premier groupe d'opérations, étapes S31,S32,S33).

Aussi, dans un mode de mise en œuvre, la procédure de fixation de la consigne effective de poussée maximale inclut les deux premières étapes du deuxième groupe d'opérations (S35,S37). Ensuite, s'il est détecté que la quantité prévisionnelle d'énergie électrique consommée En_{cons prev} est supérieure à la valeur-seuil d'énergie stockée EN_{s sto}, la procédure de fixation de la consigne effective de poussée maximale comporte de plus les opérations suivantes :
- exécuter l'opération S31 définie précédemment ;
- S31a: modifier la valeur-seuil de puissance instantanée (PI_{s max}) de telle sorte que la valeur de celle-ci devienne strictement inférieure à la valeur calculée à l'étape S31 ;
- exécuter alors les opérations S32 et S33 définies précédemment.

Réaliser les étapes S31,S31a, S32 et S33 revient à réaliser les étapes S31,S32 et S33 du premier groupe d'opérations

Selon un deuxième aspect de l'invention, dans un moteur-fusée du type présenté en introduction, l'objectif indiqué précédemment est atteint grâce à un procédé de gestion de la poussée pendant une phase de fonctionnement d'un moteur-fusée qui comprend les étapes suivantes :
(S110) on calcule une consigne initiale de poussée pour le moteur (PGCc ini) ;
(S140) à partir de la consigne initiale de poussée (PGCc ᵢₙᵢ), on calcule une consigne de poussée filtrée (PGCc _{f}) pour le moteur (100) en réalisant au moins un parmi deux groupes d'opérations (S141,S142,S143 ; S145,S146,S147,S148) ;
le premier desdits deux groupes d'opérations comprenant les opérations suivantes:
(S141) on calcule une valeur-seuil de puissance instantanée (PI_{s max}), en fonction de la puissance électrique maximale (PIₘₐₓ) susceptible d'être délivrée par l'alimentation électrique (104) ;
(S142) on compare une puissance électrique instantanée (PI) consommée par les pompes à ladite valeur-seuil de puissance instantanée (PI_{s max}), et,
(S143) si la puissance électrique (PI) consommée par les pompes (23A,23B) dépasse ladite valeur-seuil de puissance instantanée (PI_{s max}), on fixe la consigne de poussée filtrée (PGCc _{f}) à une valeur strictement inférieure à la ladite consigne initiale de poussée (PGCc ᵢₙᵢ) ; et
le deuxième desdits deux groupes d'opérations comprenant les opérations suivantes :
(S145) on calcule une quantité prévisionnelle d'énergie électrique consommée (En_{cons prev}), égale à une quantité cumulée d'énergie électrique qu'il est nécessaire de fournir aux pompes pour réaliser un profil prévisionnel de poussée prévu pour le moteur fusée ;
(S146) on calcule valeur-seuil d'énergie stockée (EN_{s sto}) fonction d'une quantité d'énergie (Enₛₜₒ) stockée dans l'alimentation électrique (104) ;
(S147) on compare la quantité prévisionnelle d'énergie électrique consommée (En_{cons prev}) à la valeur-seuil d'énergie stockée (EN_{s sto}) ;
(S148) si l'on détecte que la quantité prévisionnelle d'énergie électrique consommée (En_{cons prev}) est supérieure à la valeur-seuil d'énergie stockée (EN_{s sto}), on fixe la consigne de poussée filtrée (PGCc _{f}) à une valeur strictement inférieure à ladite consigne initiale de poussée (PGCcᵢₙᵢ).

Ce procédé est identique en grande partie au procédé suivant le premier aspect de l'invention. En particulier, les étapes S110, S141,S142,S145,S146,S147 sont identiques respectivement aux opérations S10, S31,S32,S35,S36,S37.

En revanche, les étapes S143 et S148 sont spécifiques au deuxième aspect de l'invention.

Dans ce deuxième aspect en effet, en contraste par rapport au premier aspect, les limitations de l'alimentation électrique du moteur sont prises en compte de manière immédiate puisqu'elles peuvent entraîner directement une réduction de la poussée maximale du moteur : dès qu'il est constaté un risque lié à l'alimentation électrique du moteur ('Non' à l'étape S142 ou S147), la poussée du moteur elle-même est réduite à l'étape S148.

Avantageusement, le procédé de gestion de la poussée du moteur selon ce deuxième aspect de l'invention assure par ailleurs les fonctions de maîtrise de la puissance électrique instantanée et de maîtrise de l'énergie stockée, comme le procédé de gestion de la poussée suivant le premier aspect de l'invention.

Dans un mode particulier de réalisation, les différentes étapes du procédé de gestion de la puissance électrique selon l'invention, que ce soit suivant le premier ou le deuxième aspect, sont déterminées par des instructions de programmes d'ordinateurs.

En conséquence, l'invention vise aussi un programme d'ordinateur comportant des instructions pour l'exécution des étapes du procédé de gestion de la puissance électrique tel que défini précédemment lorsque ledit programme est exécuté par un ordinateur.

Ce programme peut utiliser n'importe quel langage de programmation, et être sous la forme de code source, code objet, ou de code intermédiaire entre code source et code objet, tel que dans une forme partiellement compilée, ou dans n'importe quelle autre forme souhaitable.

L'invention vise aussi un support d'enregistrement lisible par un ordinateur sur lequel est enregistré un programme d'ordinateur comprenant des instructions pour l'exécution des étapes du procédé de gestion de la puissance électrique tel que défini précédemment.

Le support d'enregistrement peut être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple une disquette (floppy disc) ou un disque dur.

Alternativement, le support d'enregistrement peut être un circuit intégré dans lequel le programme est incorporé, le circuit étant adapté pour exécuter ou pour être utilisé dans l'exécution du procédé selon l'invention.

D'autre part, l'invention concerne également un dispositif de commande pour moteur-fusée, le moteur-fusée comprenant une chambre de combustion, deux circuits d'alimentation en ergols pour alimenter en ergols la chambre de combustion, deux pompes disposées respectivement sur les deux circuits d'alimentation en ergols, l'une au moins étant une pompe électrique, et une alimentation électrique ; ladite au moins une pompe électrique étant configurée pour être alimentée en électricité par l'alimentation électrique ; le dispositif de commande comprenant :
un module de calcul de consigne initiale de poussée, configuré pour calculer une consigne initiale de poussée pour le moteur (PGCc ᵢₙᵢ) ;
un module de calcul de consigne initiale de poussée maximale, configuré pour calculer une consigne initiale de poussée maximale (PGC_{max ini}) souhaitée pour le moteur ;
un module de calcul de consigne effective de poussée maximale, configuré pour calculer une consigne effective de poussée maximale (PGCc_{max e}) définissant une poussée maximale que l'on attend du moteur compte tenu d'au moins une limitation de l'alimentation électrique ;
le module de calcul de consigne effective de poussée maximale étant configuré pour réaliser au moins l'un de deux groupes d'opérations ;
un module de calcul de consigne de poussée filtrée, configuré pour, à partir de la consigne initiale de poussée (PGCc ᵢₙᵢ), calculer une consigne de poussée filtrée (PGCc _{f}) pour le moteur (100) de telle sorte que la consigne de poussée filtrée (PGCc _{f}) soit inférieure ou égale à la consigne effective de poussée maximale (PGCc_{max e}).

Le premier desdits deux groupes d'opérations comprend les opérations suivantes :
(S31) fixer une valeur-seuil de puissance instantanée (PI_{s max}) à une valeur strictement inférieure à une puissance électrique maximale (PIₘₐₓ) susceptible d'être délivrée par l'alimentation électrique (104) ;
(S32) comparer une puissance électrique instantanée (PI) consommée par les pompes à ladite valeur-seuil de puissance instantanée (PI_{s max}), et,
(S33) si la puissance électrique (PI) consommée par les pompes (23A,23B) dépasse ladite valeur-seuil de puissance instantanée (PI_{s max}), fixer la consigne effective de poussée maximale (PGCc_{max e}) à une valeur strictement inférieure à la ladite consigne initiale de poussée maximale (PGCC_{max ini}).

Le deuxième desdits deux groupes d'opérations comprend les opérations suivantes:
(S35) calculer une quantité prévisionnelle d'énergie électrique consommée (En_{cons prev}), égale à une quantité cumulée d'énergie électrique qu'il est nécessaire de fournir aux pompes pour réaliser un profil prévisionnel de poussée prévu pour le moteur fusée ;
(S36) calculer une valeur-seuil d'énergie stockée (EN_{s sto}) fonction d'une quantité d'énergie (Enₛₜₒ) stockée dans l'alimentation électrique (104) ;
(S37) comparer la quantité prévisionnelle d'énergie électrique consommée (En_{cons prev}) à la valeur-seuil d'énergie stockée (EN_{s sto}) ;
(S38) si l'on détecte que la quantité prévisionnelle d'énergie électrique consommée (En_{cons prev}) est supérieure à la valeur-seuil d'énergie stockée (EN_{s sto}), fixer la consigne de poussée maximale effective (PGCc_{max e}) à une valeur strictement inférieure à la ladite consigne initiale de poussée maximale (PGCC_{max ini}).

Ce dispositif de commande est configuré pour limiter la demande maximale de puissance électrique.

L'invention vise également un dispositif de commande configuré, pour sa part, à réduire la consigne de poussée calculée pour le moteur en calculant le calcul d'une consigne de poussée filtrée strictement inférieure à la consigne de poussée initialement calculée pour le moteur.

Dans ce cas, l'invention concerne un dispositif de commande pour moteur-fusée, le moteur-fusée comprenant une chambre de combustion, deux circuits d'alimentation en ergols pour alimenter en ergols la chambre de combustion, deux pompes disposées respectivement sur les deux circuits d'alimentation en ergols, l'une au moins étant une pompe électrique, et une alimentation électrique ;
ladite au moins une pompe électrique étant configurée pour être alimentée en électricité par l'alimentation électrique ;
le dispositif de commande comprenant :
un module de calcul de consigne initiale de poussée, configuré pour calculer une consigne initiale de poussée pour le moteur (PGCc ᵢₙᵢ) ;
un module de calcul de consigne de poussée filtrée, configuré pour, à partir de la consigne initiale de poussée (PGCc ᵢₙᵢ), calculer une consigne de poussée filtrée (PGCc _{f}) pour le moteur (100) en réalisant au moins un parmi deux groupes d'opérations ;
le premier des deux groupes d'opérations comprenant les opérations suivantes:
   (S141) calculer une valeur-seuil de puissance instantanée (PI_{s max}), en fonction de la puissance électrique maximale (PIₘₐₓ) susceptible d'être délivrée par l'alimentation électrique (104) ;
   (S142) comparer une puissance électrique instantanée (PI) consommée par les pompes à ladite valeur-seuil de puissance instantanée (PI_{s max}), et,
   (S143) si la puissance électrique (PI) consommée par les pompes (23A,23B) dépasse ladite valeur-seuil de puissance instantanée (PI_{s max}), fixer la consigne de poussée filtrée (PGCc _{f}) à une valeur strictement inférieure à la ladite consigne initiale de poussée (PGCc ᵢₙᵢ) ; et
le deuxième des deux groupes d'opérations comprenant les opérations suivantes:
   (S145) calculer une quantité prévisionnelle d'énergie électrique consommée (En_{cons prev}), égale à une quantité cumulée d'énergie électrique qu'il est nécessaire de fournir aux pompes pour réaliser un profil prévisionnel de poussée prévu pour le moteur fusée ;
   (S146) calculer une valeur-seuil d'énergie stockée (EN_{s sto}) fonction d'une quantité d'énergie (Enₛₜₒ) stockée dans l'alimentation électrique (104) ;
   (S147) comparer la quantité prévisionnelle d'énergie électrique consommée (En_{cons prev}) à la valeur-seuil d'énergie stockée (EN_{s sto}) ;
   (S148) si l'on détecte que la quantité prévisionnelle d'énergie électrique consommée (En_{cons prev}) est supérieure à ladite valeur-seuil d'énergie stockée (EN_{s sto}), fixer la consigne de poussée filtrée (PGCc _{f}) à une valeur strictement inférieure à la ladite consigne initiale de poussée (PGCc ᵢₙᵢ).

Enfin, l'invention concerne également un moteur-fusée comprenant une chambre de combustion, deux circuits d'alimentation en ergols pour alimenter en ergols la chambre de combustion, deux pompes disposées respectivement sur les deux circuits d'alimentation en ergols, l'une au moins étant une pompe électrique, et une alimentation électrique ; ladite au moins une pompe électrique étant configurée pour être alimentée en électricité par l'alimentation électrique ; et un dispositif de commande tel que défini précédemment.

Le moteur-fusée peut comporter notamment un détecteur configuré pour déterminer une puissance électrique disponible susceptible d'être délivrée par l'alimentation électrique, et fournir cette information au dispositif de commande.

Le moteur-fusée peut par ailleurs comporter un détecteur configuré pour déterminer la puissance électrique consommée par les pompes, et fournir cette information au dispositif de commande.

### BREVE DESCRIPTION DES DESSINS

L'invention sera bien comprise et ses avantages apparaîtront mieux à la lecture de la description détaillée qui suit, de modes de réalisation représentés à titre d'exemples non limitatifs. La description se réfère aux dessins annexés, sur lesquels :
- la figure 1 est une vue schématique d'un moteur-fusée, dans un mode de réalisation de l'invention ;
- la figure 2 est un diagramme schématique représentant l'architecture matérielle d'un dispositif de commande dans un mode de réalisation de l'invention ;
- la figure 3 est un diagramme schématique représentant l'architecture fonctionnelle d'un dispositif de commande dans un mode de réalisation de l'invention ;
- la figure 4 est un logigramme présentant les étapes d'un premier mode de mise en œuvre d'un procédé de gestion de la puissance électrique, qui correspond au premier aspect de l'invention ;
- la figure 5 est un logigramme présentant les étapes d'un deuxième mode de mise en œuvre d'un procédé de gestion de la puissance électrique, qui correspond au premier aspect de l'invention ; et
- la figure 6 est un logigramme présentant les étapes d'un troisième mode de mise en œuvre d'un procédé de gestion de la puissance électrique, qui correspond au deuxième aspect de l'invention.

### DESCRIPTION DETAILLEE DE L'INVENTION

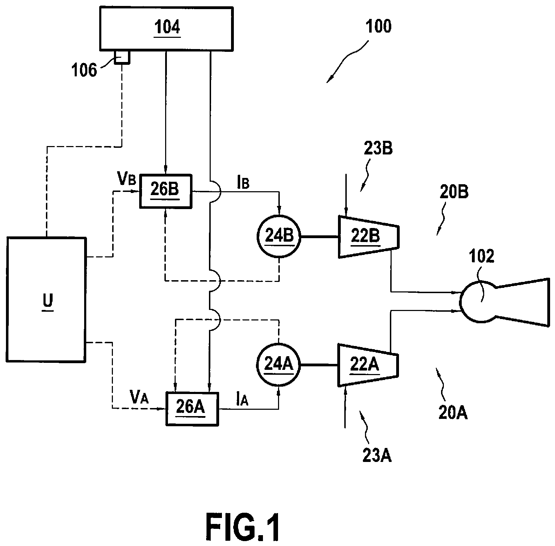

Un premier mode de réalisation de l'invention, intégré à un moteur-fusée 100 est présenté sur la figure 1.

Le moteur-fusée 100 comprend une chambre de combustion 102, deux circuits d'alimentation en ergols 20A,20B, pour alimenter en ergols la chambre de combustion, deux pompes électriques 23A,23B disposées respectivement sur les deux circuits d'alimentation en ergol 20A,20B, une alimentation électrique 104, et un dispositif de commande U.

Chacune des pompes électriques 23A,23B comporte un moteur électrique (moteurs 24A,24B) et une partie de pompage d'ergol (22A,22B). Chacune des pompes est reliée à un réservoir d'ergol non représenté, et refoule l'ergol pompé vers la chambre de combustion 102.

Chacune de ces pompes électriques est commandée par un contrôleur (26A,26B). Les contrôleurs 26A,26B reçoivent du dispositif de commande U des consignes de vitesse V_{A},V_{B} indiquant les vitesses de rotation que doivent avoir les moteurs 24A,24B, et en fonction de ces vitesses V_{A},V_{B}, transmettent aux moteurs 24A,24B la puissance électrique adéquate sous forme de courants électriques d'intensités I_{A},I_{B}.

L'alimentation électrique 104 est constituée par une batterie électrique, configurée pour alimenter les pompes en électricité. Le moteur 100 comporte en outre un capteur de niveau de charge 106. Celui-ci est agencé de manière à mesurer le niveau de charge de l'alimentation électrique 104, et à transmettre la valeur mesurée au dispositif de commande U.

La manière dont les commandes sont élaborées par le dispositif de commande U va maintenant être détaillée.

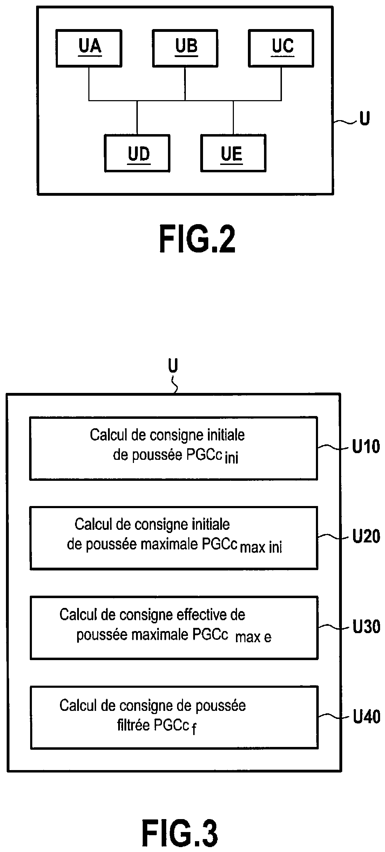

Dans le mode de réalisation décrit ici, le dispositif de commande U est intégré dans le moteur de fusée 100, et plus précisément dans son calculateur ou contrôleur, permettant ainsi de mettre en œuvre aisément une commande en temps réel et en vol du moteur de fusée 100. Le dispositif de commande U a l'architecture matérielle d'un calculateur qui, dans le mode de réalisation décrit ici, est celle d'un ordinateur, comme illustré schématiquement sur la figure 2.

Le dispositif de commande U comprend ainsi notamment un processeur UA, une mémoire morte UB, une mémoire vive UC, une mémoire non volatile UD et des moyens de communication UE pour communiquer avec différents éléments du calculateur et du moteur de fusée 100 comme notamment le capteur 106. Ces moyens de communication UE comprennent par exemple des bus de données.

La mémoire morte UB du dispositif de commande U constitue un support d'enregistrement lisible par le processeur UA et sur lequel est enregistré un programme d'ordinateur conforme à l'invention, comportant des instructions pour l'exécution des étapes d'un procédé de gestion de la poussée selon l'invention.

Le dispositif de commande U peut être placé dans un banc d'essai servant à tester le moteur de fusée, ou dans l'ordinateur de bord d'une fusée. Aucune limitation n'est attachée à l'entité dans laquelle est situé physiquement le dispositif de commande U ; il peut être situé à distance des parties principales du moteur.

Nous allons maintenant, en référence à la figure 3, décrire les principaux modules fonctionnel du dispositif de commande U, dans un mode particulier de réalisation de l'invention.

Le dispositif de commande U comprend :
un module U10 de calcul de consigne initiale de poussée, configuré pour calculer la consigne initiale de poussée PGCc ᵢₙᵢ ;
un module U20 de calcul de consigne initiale de poussée maximale, configuré pour calculer la consigne initiale de poussée maximale PGC_{max ini} souhaitée pour le moteur ;
un module U30 de calcul de consigne effective de poussée maximale, configuré pour calculer la consigne effective de poussée maximale PGCC_{max e} ; et
un module U40 de calcul de consigne de poussée filtrée, configuré pour calculer la consigne de poussée filtrée PGCc _{f} pour le moteur 100 à partir de la consigne initiale de poussée PGCc ᵢₙᵢ.

Le dispositif U est configuré pour permettre la mise en œuvre de trois programmes de gestion de la poussée du moteur-fusée 100, qui permettent de mettre en œuvre le procédé de gestion de la poussée selon l'invention de trois manières différentes.

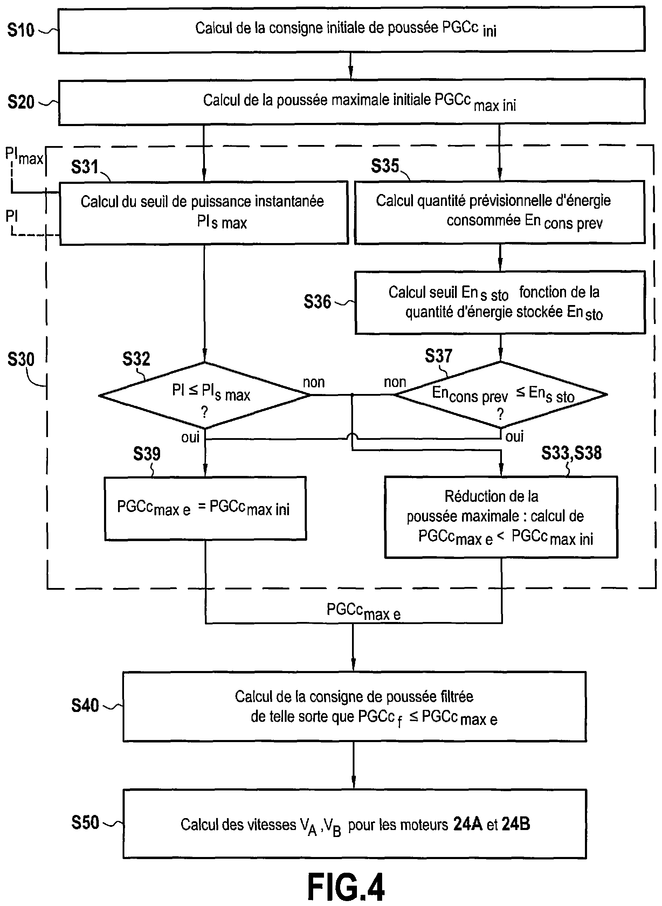

Ces modes de mise en œuvre du procédé de gestion de la poussée selon l'invention vont maintenant être décrits successivement en faisant référence respectivement aux figures 4 à 6.

Dans le premier mode de mise en œuvre (Fig.4), chacun des modules du dispositif de commande est configuré pour réaliser les opérations suivantes du procédé selon l'invention : le module U10, l'opération S10 ; le module U20, l'opération S20 ; le module U30, les différentes opérations S30, dont les opérations S31,S32,S33 et S35,S36,S37,S38,S39 notamment ; le module U40 est configuré pour réaliser l'étape S40 ainsi qu'une étape de calcul de vitesses de moteurs S50 qui sera décrite plus loin.

Les étapes S10 à S50 sont normalement répétées en permanence, de manière itérative.

Dans ce premier mode de mise en œuvre, le procédé de gestion de la poussée du moteur-fusée 100 comprend cinq étapes, effectuées de manière automatique par le dispositif de commande U :
S10. De manière connue en soi, le dispositif de commande U calcule une consigne initiale de poussée pour le moteur PGCc ᵢₙᵢ. Ce calcul prend habituellement la forme d'un programme d'asservissement mono-variable ou multi-variable.
S20. De manière connue en soi, le dispositif de commande U calcule la consigne initiale de poussée maximale (PGC_{max ini}) souhaitée pour le moteur. Ce calcul prend en compte différentes limitations fonctionnelles du moteur, de manière à définir, à l'instant considéré, la poussée maximale que peut fournir le moteur. Cependant, ce calcul est effectué sans prendre en compte la puissance électrique maximale (PIₘₐₓ) susceptible d'être délivrée par l'alimentation électrique.
S30. Le dispositif de commande U calcule la consigne effective de poussée maximale (PGCc_{max e}).

Dans le mode de mise en œuvre présenté, ce calcul prend en compte à la fois les contraintes de puissance instantanée, en réalisant le premier groupe d'opérations, et les contraintes de d'énergie stockée, en réalisant le deuxième groupe d'opérations.

Le dispositif de commande U réalise ainsi d'une part le premier groupe d'opérations :
S31. Le dispositif de commande U fixe une valeur-seuil de puissance instantanée PI_{s max} à une valeur strictement inférieure à la puissance électrique maximale PIₘₐₓ susceptible d'être délivrée par l'alimentation électrique 104. Dans l'exemple présenté, le dispositif de commande affecte à PI_{s max} une valeur égale à 80 % de la valeur de PI ₘₐₓ.
S32. Le dispositif de commande U compare la puissance électrique instantanée PI consommée par les pompes (c'est-à-dire par les moteurs des pompes) à PI_{s max}.
S33. Si la puissance électrique instantanée PI est supérieure à la valeur-seuil de puissance instantanée PI_{s max}, le dispositif de commande U fixe la consigne effective de poussée maximale PGCc_{max e} à une valeur strictement inférieure à la consigne initiale de poussée maximale PGCc_{max ini}. En l'occurrence, le dispositif de commande U affecte à PGCc_{max e} une valeur égale à 80 % de PGCc_{max ini}.

Le dispositif de commande U (module U30) réalise d'autre part le deuxième groupe d'opérations. Cependant en pratique, ce deuxième groupe d'opérations n'est réalisé que si la puissance électrique instantanée PI est inférieure ou égale à la valeur-seuil de puissance instantanée PI_{s max}.
S35. Le dispositif de commande U calcule la quantité prévisionnelle d'énergie électrique consommée (En_{cons prev}), qu'il sera nécessaire de fournir aux pompes pour réaliser le profil prévisionnel de poussée prévu pour le moteur fusée.
S36. Le dispositif de commande U calcule une valeur-seuil d'énergie stockée (EN_{s sto}) en fonction de la quantité d'énergie (Enₛₜₒ) stockée dans l'alimentation électrique (104). Dans le mode de mise en œuvre présenté, la valeur-seuil d'énergie stockée (EN_{s sto}) est égale à 80% de la quantité d'énergie (Enₛₜₒ) stockée.
S37. Le dispositif de commande U compare la quantité prévisionnelle d'énergie électrique consommée En_{cons prev} à la valeur-seuil d'énergie stockée EN_{s sto}.
S38. S'il détecte que la quantité prévisionnelle d'énergie électrique consommée En_{cons prev} est supérieure à la valeur-seuil d'énergie stockée EN_{s sto}, le dispositif de commande U fixe la consigne de poussée maximale effective PGCc_{max e} à une valeur strictement inférieure à la consigne initiale de poussée maximale PGCc_{max ini} ,à savoir une valeur égale à 80 % de la consigne initiale de poussée maximale PGCc_{max ini}.

De plus, le dispositif de commande U effectue l'opération conditionnelle suivante :
S39. Dans le cas où la puissance électrique PI consommée par les pompes 23A et 23B ne dépasse pas la valeur-seuil de puissance instantanée PI_{s max} et où la quantité prévisionnelle d'énergie électrique consommée En_{cons prev} n'est pas supérieure à la valeur-seuil d'énergie stockée (EN_{s sto}), le dispositif de commande U fixe la consigne de poussée maximale effective PGCc_{max e} à la valeur de la consigne initiale de poussée maximale PGCc_{max ini}.

La consigne de poussée maximale effective PGCc_{max e} calculée à l'issue des différentes opérations de l'étape S30 est alors utilisée pour maintenir la poussée du moteur en dessous (ou égale à) la consigne effective de poussée maximale du moteur PGCc_{max e} :
S40. Si la consigne initiale de poussée PGCc ᵢₙᵢ est strictement supérieure à la consigne effective de poussée maximale PGCc_{max e}, le dispositif de commande U affecte à la consigne de poussée filtrée PGCc _{f} la valeur de la consigne effective de poussée maximale PGCc_{max e}. Sinon, il affecte à la consigne de poussée filtrée (PGCc _{f}) la valeur de la consigne initiale de poussée PGCc ᵢₙᵢ.
S50. Enfin, le dispositif de commande U calcule les vitesses de rotation V_{A}, V_{B} qui permettent d'obtenir pour le moteur une poussée égale à la consigne de poussée filtrée PGCc _{f}. A partir de ces vitesses de rotation V_{A},V_{B}, les contrôleurs de pompe 26A, 26B délivrent les courants d'alimentation des moteurs des pompes 23A,23B, permettant ainsi à ces pompes d'atteindre les vitesses de rotation V_{A},V_{B}. Les intensité I_{A},I_{B} de ces courants d'alimentation sont régulées par une boucle d'asservissement.

La plupart du temps pendant un vol, la régulation de la poussée du moteur est réalisée principalement lors de l'étape S10, lorsque la valeur de la poussée attendue du moteur est calculée (valeur initiale PGCcᵢₙᵢ). En effet le plus souvent, la consigne de poussée filtrée PGCc _{f} calculée à l'étape S40 reste égale à la valeur initiale PGCcᵢₙᵢ de la consigne de poussée.

Eventuellement, l'étape S30, plutôt que d'être effectuée à chaque itération du procédé, peut être réalisée de manière simplifiée à certaines itérations pour réduire le temps de calcul. Dans ce cas l'étape S30 simplifiée consiste uniquement en l'étape S39, dans laquelle la consigne effective de poussée maximale PGCc_{max e} est fixée comme étant égale à la consigne initiale de poussée maximale PGC_{max ini} calculée à l'étape S20.

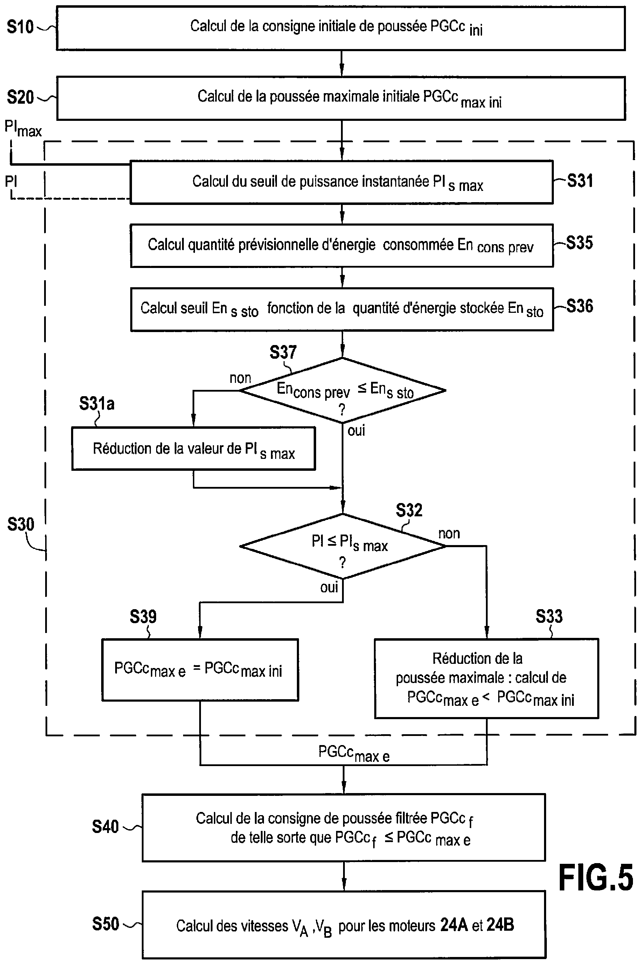

La figure 5 présente un deuxième mode de mise en œuvre du procédé de gestion de la poussée selon l'invention. Le procédé de gestion de poussée proposé par cette variante est sensiblement identique à celui présenté en relation avec la figure 4, sauf que la procédure de fixation de la consigne effective de poussée maximale PGCc _{max e} est réalisée différemment.

Suivant ce procédé, le dispositif de commande U réalise d'abord les étapes S31, S35, S36 et S37 décrites précédemment.

A l'issue de l'étape S37, s'il détecte que la quantité prévisionnelle d'énergie électrique consommée En_{cons prev} est supérieure la valeur-seuil d'énergie stockée EN_{s sto}, le dispositif de commande U exécute une opération S31a dans laquelle il modifie la valeur-seuil de puissance instantanée (PI_{s max}) de telle sorte que la valeur de celle-ci devienne strictement inférieure à la valeur calculée à l'étape S31.

Le dispositif de commande U calcule alors la valeur de la consigne effective de poussée maximale PGCc_{max e} en réalisant, selon le cas, l'une ou l'autre des opérations S33 ou S39 définies précédemment en relation avec la figure 4.

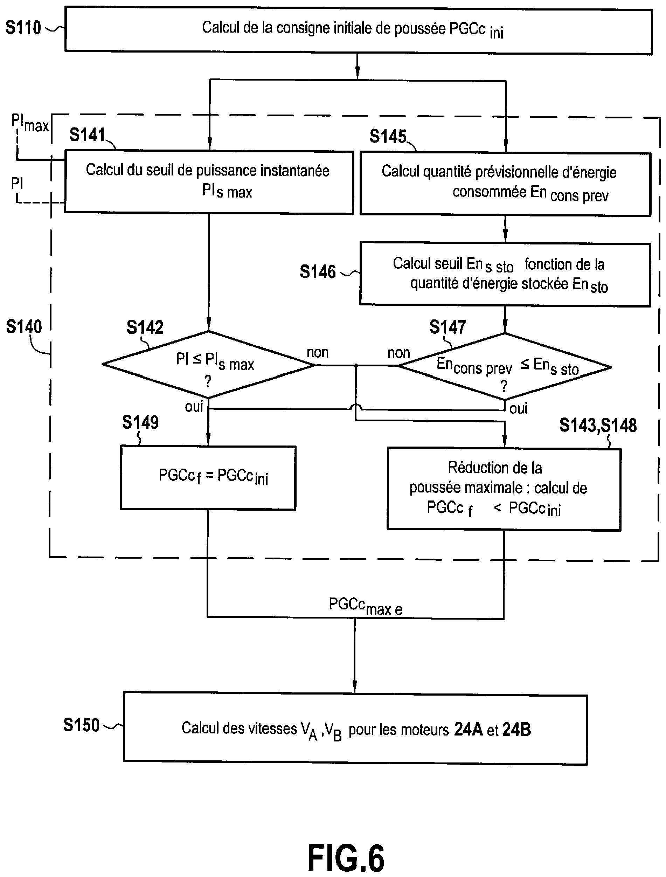

La figure 6 présente un troisième mode de mise en œuvre du procédé de gestion de la poussée selon l'invention.

Dans ce mode de mise en œuvre, seuls les modules U10 et U40 du dispositif de commande U sont utilisés.

Le module U10 est configuré pour réaliser l'opération S110 ; le module U40 est configuré pour réaliser l'étape S140 ainsi qu'une étape S150 de calcul de vitesses de moteurs qui sera décrite plus loin.

Les étapes S110 à S150 sont effectuées de manière automatique par le dispositif de commande U et sont normalement répétées en permanence, de manière itérative.

Ces étapes sont les suivantes :
S110. Comme dans les deux premiers mode de mise œuvre du procédé selon l'invention, le dispositif de commande U calcule une consigne initiale de poussée pour le moteur PGCc ini.
S140. Cette étape comporte certaines des opérations de l'étape S30 des deux premiers modes de mise en œuvre présentés précédemment.

A l'étape S140, le dispositif de commande U exécute deux groupes d'opérations.

Dans le premier groupe d'opérations, il exécute des opérations S141 et S142 identiques aux opérations S31 et S32 citées précédemment.

Ensuite, il exécute l'opération S143 suivante :
S143 : si la puissance électrique PI consommée par les pompes 23A et 23B dépasse la valeur-seuil de puissance instantanée PI_{s max}, le dispositif de commande U fixe la consigne de poussée filtrée PGCc _{f} à une valeur strictement inférieure à la consigne initiale de poussée PGCc ᵢₙᵢ.

Pour réaliser le deuxième groupe d'opérations, le dispositif de commande U réalise tout d'abord des opérations S145, S146,S147 qui sont les mêmes opérations que les opérations S35,S36,S37 décrites précédemment.
Ensuite, le dispositif de commande U réalise les opérations S148 et S149 suivantes :
S148. Si le dispositif de commande U détecte que la quantité prévisionnelle d'énergie électrique consommée En_{cons prev} est supérieure à la valeur-seuil d'énergie stockée EN_{s sto}, le dispositif de commande U fixe la consigne de poussée filtrée PGCc _{f} à une valeur strictement inférieure à la ladite consigne initiale de poussée (PGCc ᵢₙᵢ).
S149. Dans le cas où la puissance électrique PI consommée par les pompes 23A et 23B ne dépasse pas la valeur-seuil de puissance instantanée PI_{s max} et où la quantité prévisionnelle d'énergie électrique consommée En_{cons prev} n'est pas supérieure à la valeur-seuil d'énergie stockée (EN_{s sto}), le dispositif de commande U fixe la consigne de poussée filtrée PGCc_{f} à la valeur de ladite consigne initiale de poussée (PGCcᵢₙᵢ).

Ce troisième mode de mise en œuvre du procédé de gestion de la poussée du moteur permet de modifier la poussée du moteur de manière inconditionnelle dès lors que l'une des comparaisons des étapes S32,S37 (ou respectivement S142,S147) montre un risque de manque d'énergie électrique.

Quoique la présente invention ait été décrite en se référant à un exemple de réalisation spécifique, il est évident que différentes modifications et changements peuvent être effectués par rapport à cet exemple sans sortir de la portée générale de l'invention telle que définie par les revendications. Par conséquent, la description et les dessins doivent être considérés dans un sens illustratif plutôt que restrictif.

## Revendications

1. Procédé de gestion de la poussée pendant une phase de fonctionnement d'un moteur-fusée (100), le moteur-fusée comprenant une chambre de combustion (102), deux circuits d'alimentation en ergols (20A,20B) pour alimenter en ergols la chambre de combustion (102), deux pompes (23A,23B) disposées respectivement sur les deux circuits d'alimentation en ergols, l'une au moins étant une pompe électrique, et une alimentation électrique (104) ;
ladite au moins une pompe électrique étant configurée pour être alimentée en électricité par l'alimentation électrique (104) ;
le procédé comprenant les étapes suivantes :
(S10) on calcule une consigne initiale de poussée pour le moteur (PGCc ᵢₙᵢ) ;
(S20) on calcule une consigne initiale de poussée maximale (PGCC_{max ini}) souhaitée pour le moteur ;
(S30) on calcule une consigne effective de poussée maximale (PGCc_{max e}) définissant une poussée maximale que l'on attend du moteur compte tenu d'au moins une limitation de l'alimentation électrique (104) en réalisant au moins l'un de deux groupes d'opérations (S31,S32,S33 ; S35,S36,S37,S38) ;
(S40) à partir de la consigne initiale de poussée (PGCc ᵢₙᵢ), on calcule une consigne de poussée filtrée (PGCc _{f}) pour le moteur (100) de telle sorte que la consigne de poussée filtrée (PGCc _{f}) soit inférieure ou égale à la consigne effective de poussée maximale (PGCc_{max e}) ;
la consigne de poussée filtrée (PGCc _{f}) étant une valeur prévue pour permettre un calcul de la ou des commandes transmises à ladite au moins une pompe électrique ;
le premier desdits deux groupes d'opérations comprenant les opérations suivantes:
(S31) on fixe une valeur-seuil de puissance instantanée (PI_{s max}) à une valeur strictement inférieure à une puissance électrique maximale (PIₘₐₓ) susceptible d'être délivrée par l'alimentation électrique (104) ;
(S32) on compare une puissance électrique instantanée (PI) consommée par les pompes à ladite valeur-seuil de puissance instantanée (PI_{s max}), et,
(S33) si la puissance électrique (PI) consommée par les pompes (23A,23B) dépasse ladite valeur-seuil de puissance instantanée (PI_{s max}), on fixe la consigne effective de poussée maximale (PGCc_{max e}) à une valeur strictement inférieure à la ladite consigne initiale de poussée maximale (PGCc_{max ini}) ;
et le deuxième desdits deux groupes d'opérations comprenant les opérations suivantes:
(S35) on calcule une quantité prévisionnelle d'énergie électrique consommée (En_{cons prev}), égale à une quantité cumulée d'énergie électrique qu'il est nécessaire de fournir aux pompes pour réaliser un profil prévisionnel de poussée prévu pour le moteur fusée ;
(S36) on calcule une valeur-seuil d'énergie stockée (EN_{s sto}) fonction d'une quantité d'énergie (Enₛₜₒ) stockée dans l'alimentation électrique (104) ;
(S37) on compare la quantité prévisionnelle d'énergie électrique consommée (En_{cons prev}) à la valeur-seuil d'énergie stockée (EN_{s sto}) ;
(S38) si l'on détecte que la quantité prévisionnelle d'énergie électrique consommée (En_{cons prev}) est supérieure à la valeur-seuil d'énergie stockée (EN_{s sto}), on fixe la consigne de poussée maximale effective (PGCc_{max e}) à une valeur strictement inférieure à la ladite consigne initiale de poussée maximale (PGCc_{max ini}).

2. Procédé de gestion de la poussée selon la revendication 1, dans lequel l'étape S38, si l'on détecte que la quantité prévisionnelle d'énergie électrique consommée (En_{cons prev}) est supérieure à la valeur-seuil d'énergie stockée (EN_{s sto}), comprend les étapes suivantes :
(S31) on fixe une valeur-seuil de puissance instantanée (PI_{s max}) à une valeur strictement inférieure à une puissance électrique maximale (PIₘₐₓ) susceptible d'être délivrée par l'alimentation électrique (104) ;
(S31a) on modifie alors ladite valeur-seuil de puissance (PI_{s max}) de telle sorte que sa valeur soit strictement inférieure à la valeur calculée (PI_{s max}) à l'étape S31 ;
(S32) on compare une puissance électrique instantanée (PI) consommée par les pompes à ladite valeur-seuil de puissance instantanée (PI_{s max}), et,
(S33) si la puissance électrique (PI) consommée par les pompes (23A,23B) dépasse ladite valeur-seuil de puissance instantanée (PI_{s max}), on fixe la consigne effective de poussée maximale (PGCc_{max e}) à une valeur strictement inférieure à la ladite consigne initiale de poussée maximale (PGCc_{max ini}).

3. Procédé de gestion de la poussée selon la revendication 1, dans lequel la valeur-seuil de puissance instantanée (PI_{s max}) est égale à une fraction de la puissance électrique susceptible d'être délivrée par l'alimentation électrique (104), par exemple 80% ou 90% de celle-ci.

4. Procédé de gestion de la poussée pendant une phase de fonctionnement d'un moteur-fusée (100), le moteur-fusée comprenant une chambre de combustion (102), deux circuits d'alimentation en ergols (20A,20B) pour alimenter en ergols la chambre de combustion (102), deux pompes (23A,23B) disposées respectivement sur les deux circuits d'alimentation en ergols, l'une au moins étant une pompe électrique, et une alimentation électrique (104) ;
ladite au moins une pompe électrique étant configurée pour être alimentée en électricité par l'alimentation électrique (104) ;
le procédé comprenant les étapes suivantes :
(S110) on calcule une consigne initiale de poussée pour le moteur (PGCc ᵢₙᵢ) ;
(S140) à partir de la consigne initiale de poussée (PGCc ᵢₙᵢ), on calcule une consigne de poussée filtrée (PGCc _{f}) pour le moteur (100) en réalisant au moins un parmi deux groupes d'opérations (S141,S142,S143 ; S145,S146,S147,S148) ;
la consigne de poussée filtrée (PGCc _{f}) étant une valeur prévue pour permettre un calcul de la ou des commandes transmises à ladite au moins une pompe électrique ;
le premier desdits deux groupes d'opérations comprenant les opérations suivantes:
(S141) on calcule une valeur-seuil de puissance instantanée (PI_{s max}), en fonction de la puissance électrique maximale (PIₘₐₓ) susceptible d'être délivrée par l'alimentation électrique (104) ;
(S142) on compare une puissance électrique instantanée (PI) consommée par les pompes à ladite valeur-seuil de puissance instantanée (PI_{s max}), et,
(S143) si la puissance électrique (PI) consommée par les pompes (23A,23B) dépasse ladite valeur-seuil de puissance instantanée (PI_{s max}), on fixe la consigne de poussée filtrée (PGCc _{f}) à une valeur strictement inférieure à la ladite consigne initiale de poussée (PGCc ᵢₙᵢ) ; et
le deuxième desdits deux groupes d'opérations comprenant les opérations suivantes :
(S145) on calcule une quantité prévisionnelle d'énergie électrique consommée (En_{cons prev}), égale à une quantité cumulée d'énergie électrique qu'il est nécessaire de fournir aux pompes pour réaliser un profil prévisionnel de poussée prévu pour le moteur fusée ;
(S146) on calcule valeur-seuil d'énergie stockée (EN_{s sto}) fonction d'une quantité d'énergie (Enₛₜₒ) stockée dans l'alimentation électrique (104) ;
(S147) on compare la quantité prévisionnelle d'énergie électrique consommée (En_{cons prev}) à la valeur-seuil d'énergie stockée (EN_{s sto}) ;
(S148) si l'on détecte que la quantité prévisionnelle d'énergie électrique consommée (En_{cons prev}) est supérieure à la valeur-seuil d'énergie stockée (EN_{s sto}), on fixe la consigne de poussée filtrée (PGCc _{f}) à une valeur strictement inférieure à ladite consigne initiale de poussée (PGCc ᵢₙᵢ).

5. Programme d'ordinateur comportant des instructions pour l'exécution des étapes du procédé de gestion de la poussée selon l'une quelconque des revendications 1 à 4 lorsque ledit programme est exécuté par un ordinateur.

6. Support d'enregistrement lisible par un ordinateur sur lequel est enregistré un programme d'ordinateur selon la revendication 5.

7. Dispositif de commande (U) pour moteur-fusée (100), le moteur-fusée comprenant une chambre de combustion (102), deux circuits d'alimentation en ergols (20A,20B) pour alimenter en ergols la chambre de combustion (102), deux pompes (23A,23B) disposées respectivement sur les deux circuits d'alimentation en ergols, l'une au moins étant une pompe électrique, et une alimentation électrique (104) ;
ladite au moins une pompe électrique (23A,23B) étant configurée pour être alimentée en électricité par l'alimentation électrique (104) ;
le dispositif de commande comprenant :
un module (U10) de calcul de consigne initiale de poussée, configuré pour calculer une consigne initiale de poussée pour le moteur (PGCc ᵢₙᵢ) ;
un module (U20) de calcul de consigne initiale de poussée maximale, configuré pour calculer une consigne initiale de poussée maximale (PGC_{max ini}) souhaitée pour le moteur ;
un module (U30) de calcul de consigne effective de poussée maximale, configuré pour calculer une consigne effective de poussée maximale (PGCc_{max e}) définissant une poussée maximale que l'on attend du moteur compte tenu d'au moins une limitation de l'alimentation électrique (104) ;
le module (U30) de calcul de consigne effective de poussée maximale étant configuré pour réaliser au moins l'un de deux groupes d'opérations (S31,S32,S33 ; S35,S36,S37,S38);
un module (U40) de calcul de consigne de poussée filtrée, configuré pour, à partir de la consigne initiale de poussée (PGCc ᵢₙᵢ), calculer une consigne de poussée filtrée (PGCc _{f}) pour le moteur (100) de telle sorte que la consigne de poussée filtrée (PGCc _{f}) soit inférieure ou égale à la consigne effective de poussée maximale (PGCc_{max e}) ;
la consigne de poussée filtrée (PGCc _{f}) étant une valeur prévue pour permettre un calcul de la ou des commandes transmises à ladite au moins une pompe électrique ;
le premier desdits deux groupes d'opérations comprenant les opérations suivantes :
(S31) fixer une valeur-seuil de puissance instantanée (PI_{s max}) à une valeur strictement inférieure à une puissance électrique maximale (PIₘₐₓ) susceptible d'être délivrée par l'alimentation électrique (104) ;
(S32) comparer une puissance électrique instantanée (PI) consommée par les pompes à ladite valeur-seuil de puissance instantanée (PI_{s max}), et,
(S33) si la puissance électrique (PI) consommée par les pompes (23A,23B) dépasse ladite valeur-seuil de puissance instantanée (PI_{s max}), fixer la consigne effective de poussée maximale (PGCc_{max e}) à une valeur strictement inférieure à la ladite consigne initiale de poussée maximale (PGCC_{max ini}) ;
le deuxième desdits deux groupes d'opérations comprenant les opérations suivantes :
(S35) on calcule une quantité prévisionnelle d'énergie électrique consommée (En_{cons prev}), égale à une quantité cumulée d'énergie électrique qu'il est nécessaire de fournir aux pompes pour réaliser un profil prévisionnel de poussée prévu pour le moteur fusée ;
(S36) on calcule une valeur-seuil d'énergie stockée (EN_{s sto}) fonction d'une quantité d'énergie (Enₛₜₒ) stockée dans l'alimentation électrique (104) ;
(S37) on compare la quantité prévisionnelle d'énergie électrique consommée (En_{cons prev}) à la valeur-seuil d'énergie stockée (EN_{s sto}) ;
(S38) si l'on détecte que la quantité prévisionnelle d'énergie électrique consommée (En_{cons prev}) est supérieure à la valeur-seuil d'énergie stockée (EN_{s sto}), on fixe la consigne de poussée maximale effective (PGCc_{max e}) à une valeur strictement inférieure à la ladite consigne initiale de poussée maximale (PGCc_{max ini}).

8. Dispositif de commande (U) pour moteur-fusée (100), le moteur-fusée comprenant une chambre de combustion (102), deux circuits d'alimentation en ergols (20A,20B) pour alimenter en ergols la chambre de combustion (102), deux pompes (23A,23B) disposées respectivement sur les deux circuits d'alimentation en ergols, l'une au moins étant une pompe électrique, et une alimentation électrique (104) ;
ladite au moins une pompe électrique (23A,23B) étant configurée pour être alimentée en électricité par l'alimentation électrique (104) ;
le dispositif de commande comprenant :
un module (U10) de calcul de consigne initiale de poussée, configuré pour calculer une consigne initiale de poussée pour le moteur (PGCc ᵢₙᵢ) ;
un module (U40) de calcul de consigne de poussée filtrée, configuré pour, à partir de la consigne initiale de poussée (PGCc ᵢₙᵢ), calculer une consigne de poussée filtrée (PGCc _{f}) pour le moteur (100) en réalisant au moins un parmi deux groupes d'opérations ;
la consigne de poussée filtrée (PGCc _{f}) étant une valeur prévue pour permettre un calcul de la ou des commandes transmises à ladite au moins une pompe électrique ;
le premier desdits deux groupes d'opérations (S141,S142,S143) comprenant les opérations suivantes :
(S141) on calcule une valeur-seuil de puissance instantanée (PI_{s max}), en fonction de la puissance électrique maximale (PIₘₐₓ) susceptible d'être délivrée par l'alimentation électrique (104) ;
(S142) on compare une puissance électrique instantanée (PI) consommée par les pompes à ladite valeur-seuil de puissance instantanée (PI_{s max}), et,
(S143) si la puissance électrique (PI) consommée par les pompes (23A,23B) dépasse ladite valeur-seuil de puissance instantanée (PI_{s max}), on fixe la consigne de poussée filtrée (PGCc _{f}) à une valeur strictement inférieure à la ladite consigne initiale de poussée (PGCc ᵢₙᵢ) ; et
le deuxième desdits deux groupes d'opérations (S145,S146,S147,S148) comprenant les opérations suivantes :
(S145) on calcule une quantité prévisionnelle d'énergie électrique consommée (En_{cons prev}), égale à une quantité cumulée d'énergie électrique qu'il est nécessaire de fournir aux pompes pour réaliser un profil prévisionnel de poussée prévu pour le moteur fusée ;
(S146) on calcule une valeur-seuil d'énergie stockée (EN_{s sto}) fonction d'une quantité d'énergie (Enₛₜₒ) stockée dans l'alimentation électrique (104) ;
(S147) on compare la quantité prévisionnelle d'énergie électrique consommée (En_{cons prev}) à la valeur-seuil d'énergie stockée (EN_{s sto}) ;
(S148) si l'on détecte que la quantité prévisionnelle d'énergie électrique consommée (En_{cons prev}) est supérieure à la valeur-seuil d'énergie stockée (EN_{s sto}), on fixe la consigne de poussée filtrée (PGCc _{f}) à une valeur strictement inférieure à la ladite consigne initiale de poussée (PGCc ᵢₙᵢ).

9. Moteur-fusée (100) comprenant une chambre de combustion (102), deux circuits d'alimentation en ergols (20A,20B) pour alimenter en ergols la chambre de combustion (102), deux pompes (23A,23B) disposées respectivement sur les deux circuits d'alimentation en ergols, l'une au moins étant une pompe électrique, et une alimentation électrique (104) ;
ladite au moins une pompe électrique (23A,23B) étant configurée pour être alimentée en électricité par l'alimentation électrique (104) ; et
un dispositif de commande (U) selon l'une quelconque des revendications 7 ou 8.

## Patentansprüche

1. Verfahren zur Verwaltung des Schubs eines Raketentriebwerks (100) während einer Betriebsphase, wobei das Raketentriebwerk eine Brennkammer (102), zwei Treibstoffversorgungsschaltungen (20A, 20B) zum Versorgen der Brennkammer (102) mit Treibstoff, zwei Pumpen (23A, 23B), die jeweils auf den zwei Treibstoffversorgungsschaltungen angeordnet sind, wobei zumindest eine davon eine elektrische Pumpe ist, und eine Stromversorgung (104) umfasst,
wobei die zumindest eine elektrische Pumpe dazu ausgestaltet ist, von der Stromversorgung (104) mit Strom versorgt zu werden,
wobei das Verfahren die folgenden Schritte umfasst:
(S10) Berechnen eines anfänglichen Schubsollwertes für das Triebwerk (PGCc ᵢₙᵢ),
(S20) Berechnen eines maximalen anfänglichen Schubsollwertes (PGCc_{max ini}), der für das Triebwerk gewünscht wird,
(S30) Berechnen eines maximalen effektiven Schubsollwertes (PGCc_{max e}), der einen maximalen Schub definiert, der von dem Triebwerk erwartet wird, unter Berücksichtigung von zumindest einer Begrenzung der Stromversorgung (104), indem zumindest eine von zwei Gruppen von Vorgängen (S31, S32, S33; S35, S36, S37, S38) durchgeführt wird,
(S40) auf der Grundlage des anfänglichen Schubsollwertes (PGCc ᵢₙᵢ), Berechnen eines gefilterten Schubsollwertes (PGCc _{f}) für das Triebwerk (100), sodass der gefilterte Schubsollwert (PGCc _{f}) kleiner als der oder gleich dem maximalen effektiven Schubsollwert (PGCc_{max e}) ist,
wobei der gefilterte Schubsollwert (PGCc _{f}) ein Wert ist, der vorgesehen ist, um eine Berechnung von dem oder von Befehl(en) zu ermöglichen, die an die zumindest eine elektrische Pumpe übertragen werden,
wobei die erste der zwei Gruppen von Vorgängen die folgenden Vorgänge umfasst:
(S31) Festlegen eines Schwellenwertes der Momentanleistung (PI_{s max}) auf einen Wert, der zwingend kleiner als eine maximale elektrische Leistung (PIₘₐₓ) ist, die von der Stromversorgung (104) geliefert werden kann,
(S32) Vergleichen einer elektrischen Momentanleistung (PI), die durch die Pumpen verbraucht wird, mit dem Schwellenwert der Momentanleistung (PI_{s max}), und
(S33) wenn die elektrische Leistung (PI), die durch die Pumpen (23A, 23B) verbraucht wird, den Schwellenwert der Momentanleistung (PI_{s max}) überschreitet, Festlegen des maximalen effektiven Schubsollwertes (PGCc_{max e}) auf einen Wert, der zwingend kleiner als der maximale anfängliche Schubsollwert (PGCc_{max ini}) ist,
und die zweite der zwei Gruppen von Vorgängen die folgenden Vorgänge umfasst:
(S35) Berechnen einer voraussichtlichen Menge an verbrauchter elektrischer Energie (En_{cons prev}) gleich einer kumulierten Menge an elektrischer Energie, die erforderlich ist, um die Pumpen zu versorgen, um ein voraussichtliches Schubprofil umzusetzen, das für das Raketentriebwerk vorgesehen ist,
(S36) Berechnen eines Schwellenwertes der gespeicherten Energie (EN_{s sto}) in Abhängigkeit einer Menge an Energie (Enₛₜₒ), die in der Stromversorgung (104) gespeichert ist,
(S37) Vergleichen der voraussichtlichen Menge an verbrauchter elektrischer Energie (En_{cons prev}) mit dem Schwellenwert der gespeicherten Energie (EN_{s sto}),
(S38) falls erfasst wird, dass die voraussichtliche Menge an verbrauchter elektrischer Energie (En_{cons prev}) größer als der Schwellenwert der gespeicherten Energie (EN_{s sto}) ist, Festlegen des maximalen effektiven Schubsollwertes (PGCc_{max e}) auf einen Wert, der zwingend kleiner als der maximale anfängliche Schubsollwert (PGCc_{max ini}) ist.

2. Verfahren zur Verwaltung des Schubs nach Anspruch 1, wobei der Schritt S38, falls erfasst wird, dass die voraussichtliche Menge an verbrauchter elektrischer Energie (En_{cons prev}) größer als der Schwellenwert der gespeicherten Energie (EN_{s sto}) ist, die folgenden Schritte umfasst:
(S31) Festlegen eines Schwellenwertes der Momentanleistung (PI_{s max}) auf einen Wert, der zwingend kleiner als eine maximale elektrische Leistung (PIₘₐₓ) ist, die von der Stromversorgung (104) geliefert werden kann,
(S31a) anschließendes Modifizieren des Schwellenwertes der Leistung (PI_{s max}), sodass sein Wert zwingend kleiner als der in Schritt S31 berechnete Wert (PI_{s max}) ist,
(S32) Vergleichen einer elektrischen Momentanleistung (PI), die durch die Pumpen verbraucht wird, mit dem Schwellenwert der Momentanleistung (PI_{s max}), und
(S33) wenn die elektrische Leistung (PI), die durch die Pumpen (23A, 23B) verbraucht wird, den Schwellenwert der Momentanleistung (PI_{s max}) überschreitet, Festlegen des maximalen effektiven Schubsollwertes (PGCc_{max e}) auf einen Wert, der zwingend kleiner als der maximale anfängliche Schubsollwert (PGCc_{max ini}) ist.

3. Verfahren zur Verwaltung des Schubs nach Anspruch 1, wobei der Schwellenwert der Momentanleistung (PI_{s max}) gleich einem Bruchteil der elektrischen Leistung ist, die von der Stromversorgung (104) geliefert werden kann, zum Beispiel 80 % oder 90 % davon.

4. Verfahren zur Verwaltung des Schubs eines Raketentriebwerks (100) während einer Betriebsphase, wobei das Raketentriebwerk eine Brennkammer (102), zwei Treibstoffversorgungsschaltungen (20A, 20B) zum Versorgen der Brennkammer (102) mit Treibstoff, zwei Pumpen (23A, 23B), die jeweils auf den zwei Treibstoffversorgungsschaltungen angeordnet sind, wobei zumindest eine davon eine elektrische Pumpe ist, und eine Stromversorgung (104) umfasst,
wobei die zumindest eine elektrische Pumpe dazu ausgestaltet ist, von der Stromversorgung (104) mit Strom versorgt zu werden,
wobei das Verfahren die folgenden Schritte umfasst:
(S110) Berechnen eines anfänglichen Schubsollwertes für das Triebwerk (PGCc ᵢₙᵢ),
(S140) auf der Grundlage des anfänglichen Schubsollwertes (PGCc ᵢₙᵢ), Berechnen eines gefilterten Schubsollwertes (PGCc _{f}) für das Triebwerk (100), indem zumindest eine von zwei Gruppen von Vorgängen (S141, S142, S143; S145, S146, S147, S148) umgesetzt wird,
wobei der gefilterte Schubsollwert (PGCc _{f}) ein Wert ist, der vorgesehen ist, um eine Berechnung von dem oder von Befehl(en) zu ermöglichen, die an die zumindest eine elektrische Pumpe übertragen werden,
wobei die erste der zwei Gruppen von Vorgängen die folgenden Vorgänge umfasst:
(S141) Berechnen eines Schwellenwertes der Momentanleistung (PI_{s max}) in Abhängigkeit von der maximalen elektrischen Leistung (PIₘₐₓ), die von der Stromversorgung (104) geliefert werden kann,
(S142) Vergleichen einer elektrischen Momentanleistung (PI), die durch die Pumpen verbraucht wird, mit dem Schwellenwert der Momentanleistung (PI_{s max}), und
(S143) wenn die elektrische Leistung (PI), die durch die Pumpen (23A, 23B) verbraucht wird, den Schwellenwert der Momentanleistung (PI_{s max}) überschreitet, Festlegen des gefilterten Schubsollwertes (PGCc _{f}) auf einen Wert, der zwingend kleiner als der anfängliche Schubsollwert (PGCc ᵢₙᵢ) ist, und
die zweite der zwei Gruppen von Vorgängen die folgenden Vorgänge umfasst:
(S145) Berechnen einer voraussichtlichen Menge an verbrauchter elektrischer Energie (En_{cons prev}) gleich einer kumulierten Menge an elektrischer Energie, die erforderlich ist, um die Pumpen zu versorgen, um ein voraussichtliches Schubprofil umzusetzen, das für das Raketentriebwerk vorgesehen ist,
(S146) Berechnen eines Schwellenwertes der gespeicherten Energie (EN_{s sto}) in Abhängigkeit einer Menge an Energie (Enₛₜₒ), die in der Stromversorgung (104) gespeichert ist,
(S147) Vergleichen der voraussichtlichen Menge an verbrauchter elektrischer Energie (En_{cons prev}) mit dem Schwellenwert der gespeicherten Energie (EN_{s sto}),
(S148) falls erfasst wird, dass die voraussichtliche Menge an verbrauchter elektrischer Energie (En_{cons prev}) größer als der Schwellenwert der gespeicherten Energie (EN_{s sto}) ist, Festlegen des gefilterten Schubsollwertes (PGCc _{f}) auf einen Wert, der zwingend kleiner als der anfängliche Schubsollwert (PGCc ᵢₙᵢ) ist.

5. Computerprogramm, das Anweisungen zur Ausführung der Schritte des Verfahrens zur Verwaltung des Schubs nach einem der Ansprüche 1 bis 4 beinhaltet, wenn das Programm von einem Computer ausgeführt wird.

6. Aufzeichnungsmedium, das von einem Computer lesbar ist, auf dem ein Computerprogramm nach Anspruch 5 aufgezeichnet ist.

7. Steuervorrichtung (U) für ein Raketentriebwerk (100), wobei das Raketentriebwerk eine Brennkammer (102), zwei Treibstoffversorgungsschaltungen (20A, 20B) zum Versorgen der Brennkammer (102) mit Treibstoff, zwei Pumpen (23A, 23B), die jeweils auf den zwei Treibstoffversorgungsschaltungen angeordnet sind, wobei zumindest eine davon eine elektrische Pumpe ist, und eine Stromversorgung (104) umfasst,
wobei die zumindest eine elektrische Pumpe dazu ausgestaltet ist, von der Stromversorgung (104) mit Strom versorgt zu werden,
wobei die Steuervorrichtung umfasst:
ein Modul (U10) zur Berechnung eines anfänglichen Schubsollwertes, das dazu ausgestaltet ist, einen anfänglichen Schubsollwert für das Triebwerk (PGCc ᵢₙᵢ) zu berechnen,
ein Modul (U20) zur Berechnung eines maximalen anfänglichen Schubsollwertes, das dazu ausgestaltet ist, einen maximalen anfänglichen Schubsollwert (PGCc_{max ini}) zu berechnen, der für das Triebwerk gewünscht wird,
ein Modul (U30) zur Berechnung eines maximalen effektiven Schubsollwertes, das dazu ausgestaltet ist, einen maximalen effektiven Schubsollwert (PGCc_{max e}) zu berechnen, der einen maximalen Schub definiert, der von dem Triebwerk erwartet wird, unter Berücksichtigung von zumindest einer Begrenzung der Stromversorgung (104),
wobei das Modul (U30) zur Berechnung eines maximalen effektiven Schubsollwertes dazu ausgestaltet ist, zumindest eine von zwei Gruppen von Vorgängen (S31, S32, S33; S35, S36, S37, S38) umzusetzen,
ein Modul (U40) zur Berechnung eines gefilterten Schubsollwertes, das dazu ausgestaltet ist, auf der Grundlage des anfänglichen Schubsollwertes (PGCc ᵢₙᵢ) einen gefilterten Schubsollwert (PGCc _{f}) für das Triebwerk (100) zu berechnen, sodass der gefilterte Schubsollwert (PGCc _{f}) kleiner als der oder gleich dem maximalen effektiven Schubsollwert (PGCc_{max e}) ist,
wobei der gefilterte Schubsollwert (PGCc _{f}) ein Wert ist, der vorgesehen ist, um eine Berechnung von dem oder von Befehl(en) zu ermöglichen, die an die zumindest eine elektrische Pumpe übertragen werden,
wobei die erste der zwei Gruppen von Vorgängen die folgenden Vorgänge umfasst:
(S31) Festlegen eines Schwellenwertes der Momentanleistung (PI_{s max}) auf einen Wert, der zwingend kleiner als eine maximale elektrische Leistung (PIₘₐₓ) ist, die von der Stromversorgung (104) geliefert werden kann,
(S32) Vergleichen einer elektrischen Momentanleistung (PI), die durch die Pumpen verbraucht wird, mit dem Schwellenwert der Momentanleistung (PI_{s max}), und
(S33) wenn die elektrische Leistung (PI), die durch die Pumpen (23A, 23B) verbraucht wird, den Schwellenwert der Momentanleistung (PI_{s max}) überschreitet, Festlegen des maximalen effektiven Schubsollwertes (PGCc_{max e}) auf einen Wert, der zwingend kleiner als der maximale anfängliche Schubsollwert (PGCc_{max ini}) ist,
die zweite der zwei Gruppen von Vorgängen die folgenden Vorgänge umfasst:
(S35) Berechnen einer voraussichtlichen Menge an verbrauchter elektrischer Energie (En_{cons prev}) gleich einer kumulierten Menge an elektrischer Energie, die erforderlich ist, um die Pumpen zu versorgen, um ein voraussichtliches Schubprofil umzusetzen, das für das Raketentriebwerk vorgesehen ist,
(S36) Berechnen eines Schwellenwertes der gespeicherten Energie (EN_{s sto}) in Abhängigkeit einer Menge an Energie (Enₛₜₒ), die in der Stromversorgung (104) gespeichert ist,
(S37) Vergleichen der voraussichtlichen Menge an verbrauchter elektrischer Energie (En_{cons prev}) mit dem Schwellenwert der gespeicherten Energie (EN_{s sto}),
(S38) falls erfasst wird, dass die voraussichtliche Menge an verbrauchter elektrischer Energie (En_{cons prev}) größer als der Schwellenwert der gespeicherten Energie (EN_{s sto}) ist, Festlegen des maximalen effektiven Schubsollwertes (PGCc_{max e}) auf einen Wert, der zwingend kleiner als der maximale anfängliche Schubsollwert (PGCc_{max ini}) ist.

8. Steuervorrichtung (U) für ein Raketentriebwerk (100), wobei das Raketentriebwerk eine Brennkammer (102), zwei Treibstoffversorgungsschaltungen (20A, 20B) zum Versorgen der Brennkammer (102) mit Treibstoff, zwei Pumpen (23A, 23B), die jeweils auf den zwei Treibstoffversorgungsschaltungen angeordnet sind, wobei zumindest eine davon eine elektrische Pumpe ist, und eine Stromversorgung (104) umfasst,
wobei die zumindest eine elektrische Pumpe (23A, 23B) dazu ausgestaltet ist, von der Stromversorgung (104) mit Strom versorgt zu werden,
wobei die Steuervorrichtung umfasst:
ein Modul (U10) zur Berechnung eines anfänglichen Schubsollwertes, das dazu ausgestaltet ist, einen anfänglichen Schubsollwert für das Triebwerk (PGCc ᵢₙᵢ) zu berechnen,
ein Modul (U40) zur Berechnung eines gefilterten Schubsollwertes, das dazu ausgestaltet ist, auf der Grundlage des anfänglichen Schubsollwertes (PGCc ᵢₙᵢ) einen gefilterten Schubsollwert (PGCc _{f}) für das Triebwerk (100) zu berechnen, indem eine von zwei Gruppen von Vorgängen umgesetzt wird,
wobei der gefilterte Schubsollwert (PGCc _{f}) ein Wert ist, der vorgesehen ist, um eine Berechnung von dem oder von Befehl(en) zu ermöglichen, die an die zumindest eine elektrische Pumpe übertragen werden,
wobei die erste der zwei Gruppen von Vorgängen (S141, S142, S143) die folgenden Vorgänge umfasst:
(S141) Berechnen eines Schwellenwertes der Momentanleistung (PI_{s max}) in Abhängigkeit von der maximalen elektrischen Leistung (PIₘₐₓ), die von der Stromversorgung (104) geliefert werden kann,
(S142) Vergleichen einer elektrischen Momentanleistung (PI), die durch die Pumpen verbraucht wird, mit dem Schwellenwert der Momentanleistung (PI_{s max}), und
(S143) wenn die elektrische Leistung (PI), die durch die Pumpen (23A, 23B) verbraucht wird, den Schwellenwert der Momentanleistung (PI_{s max}) überschreitet, Festlegen des gefilterten Schubsollwertes (PGCc _{f}) auf einen Wert, der zwingend kleiner als der anfängliche Schubsollwert (PGCc ᵢₙᵢ) ist, und
die zweite der zwei Gruppen von Vorgängen (S145, S146, S147, S148) die folgenden Vorgänge umfasst:
(S145) Berechnen einer voraussichtlichen Menge an verbrauchter elektrischer Energie (En_{cons prev}) gleich einer kumulierten Menge an elektrischer Energie, die erforderlich ist, um die Pumpen zu versorgen, um ein voraussichtliches Schubprofil umzusetzen, das für das Raketentriebwerk vorgesehen ist,
(S146) Berechnen eines Schwellenwertes der gespeicherten Energie (EN_{s sto}) in Abhängigkeit einer Menge an Energie (Enₛₜₒ), die in der Stromversorgung (104) gespeichert ist,
(S147) Vergleichen der voraussichtlichen Menge an verbrauchter elektrischer Energie (En_{cons prev}) mit dem Schwellenwert der gespeicherten Energie (EN_{s sto}),
(S148) falls erfasst wird, dass die voraussichtliche Menge an verbrauchter elektrischer Energie (En_{cons prev}) größer als der Schwellenwert der gespeicherten Energie (EN_{s sto}) ist, Festlegen des gefilterten Schubsollwertes (PGCc _{f}) auf einen Wert, der zwingend kleiner als der anfängliche Schubsollwert (PGCc ᵢₙᵢ) ist.

9. Raketentriebwerk (100), das eine Brennkammer (102), zwei Treibstoffversorgungsschaltungen (20A, 20B) zum Versorgen der Brennkammer (102) mit Treibstoff, zwei Pumpen (23A, 23B), die jeweils auf den zwei Treibstoffversorgungsschaltungen angeordnet sind, wobei zumindest eine davon eine elektrische Pumpe ist, und eine Stromversorgung (104) umfasst,
wobei die zumindest eine elektrische Pumpe (23A, 23B) dazu ausgestaltet ist, von der Stromversorgung (104) mit Strom versorgt zu werden, und
eine Steuervorrichtung (U) nach einem der Ansprüche 7 oder 8.

## Claims

1. A method for managing the thrust during an operating phase of a rocket engine (100), the rocket engine comprising a combustion chamber (102), two propellant supply circuits (20A, 20B) to supply the combustion chamber (102) with propellants, two pumps (23A, 23B) disposed respectively on the two propellant supply circuits, at least one of which being an electric pump, and a power supply (104);
said at least one electric pump being configured to be electrically powered by the power supply (104);
the method comprising the following steps:
(S10) calculating an initial thrust setpoint for the engine (PGCc ᵢₙᵢ) ;
(S20) calculating an initial maximum thrust setpoint (PGCc_{max ini}) desired for the engine;
(S30) calculating an effective maximum thrust setpoint (PGCc_{max e}) defining a maximum thrust expected from the engine given at least one limitation of the power supply (104) by carrying out at least one of two groups of operations (S31, S32, S33; S35, S36, S37, S38);
(S40) calculating, from the initial thrust setpoint (PGCc ᵢₙᵢ), a filtered thrust setpoint (PGCc _{f}) for the engine (100) such that the filtered thrust setpoint (PGCc _{f}) is lower than or equal to the effective maximum thrust setpoint (PGCc_{max e});
the filtered thrust setpoint (PGCc _{f}) being a value provided to allow a calculation of the command(s) transmitted to said at least one electric pump;
the first of said two groups of operations comprising the following operations:
(S31) setting an instantaneous power threshold value (PI_{s max}) to a value strictly lower than a maximum electric power (PIₘₐₓ) that the power supply (104) is capable of delivering;
(S32) comparing an instantaneous electric power (PI) consumed by the pumps with said instantaneous power threshold value (PI_{s max}), and,
(S33) if the electric power (PI) consumed by the pumps (23A, 23B) exceeds said instantaneous power threshold value (PI_{s max}), setting the effective maximum thrust setpoint (PGCc_{max e}) to a value strictly lower than said initial maximum thrust setpoint (PGCc_{max ini});
and the second of said two groups of operations comprising the following operations:
(S35) calculating a predicted amount of consumed electrical energy (En_{cons prev}), equal to a cumulative amount of electrical energy to be supplied to the pumps in order to achieve a predicted thrust profile predicted for the rocket engine;
(S36) calculating a stored energy threshold value (EN_{s sto}) as a function of an amount of energy (Enₛₜₒ) stored in the power supply (104);
(S37) comparing the predicted amount of consumed electrical energy (En_{cons prev}) with the stored energy threshold value (EN_{s sto});
(S38) if it is detected that the predicted amount of consumed electrical energy (En_{cons prev}) is greater than the stored energy threshold value (EN_{s sto}), setting the effective maximum thrust setpoint (PGCc_{max e}) to a value strictly lower than said initial maximum thrust setpoint (PGCc_{max ini}).

2. The thrust management method according to claim 1, wherein step S38, if it is detected that the predicted amount of consumed electrical energy (En_{cons prev}) is greater than the stored energy threshold value (EN_{s sto}), comprises the following steps:
(S31) setting an instantaneous power threshold value (PI_{s max}) to a value strictly lower than a maximum electric power (PIₘₐₓ) that the power supply (104) is capable of delivering;
(S31a) then modifying said power threshold value (PI_{s max}) such that its value is strictly lower than the calculated value (PI_{s max}) in step S31;
(S32) comparing an instantaneous electric power (PI) consumed by the pumps with said instantaneous power threshold value (PI_{s max}), and,
(S33) if the electric power (PI) consumed by the pumps (23A, 23B) exceeds said instantaneous power threshold value (PI_{s max}), setting the effective maximum thrust setpoint (PGCc_{max e}) to a value strictly lower than said initial maximum thrust setpoint (PGCc_{max ini}).

3. The thrust management method according to claim 1, wherein the instantaneous power threshold value (PI_{s max}) is equal to a fraction of the electric power that the power supply (104) is capable of delivering, by example 80% or 90% thereof.

4. A method for managing the thrust during an operating phase of a rocket engine (100), the rocket engine comprising a combustion chamber (102), two propellant supply circuits (20A, 20B) to supply the combustion chamber (102) with propellants, two pumps (23A, 23B) disposed respectively on the two propellant supply circuits, at least one of which being an electric pump, and a power supply (104);
said at least one electric pump being configured to be electrically powered by the power supply (104);
the method comprising the following steps:
(S110) calculating an initial thrust setpoint for the engine (PGCc ᵢₙᵢ)
(S140) calculating, from the initial thrust setpoint (PGCc ᵢₙᵢ), a filtered thrust setpoint (PGCc _{f}) for the engine (100) by carrying out at least one among two groups of operations (S141, S142, S143; S145, S146, S147, S148);
the filtered thrust setpoint (PGCc _{f}) being a value provided to allow a calculation of the command(s) transmitted to said at least one electric pump;
the first of said two groups of operations comprising the following operations:
(S141) calculating an instantaneous power threshold value (PI_{s max}), as a function of the maximum electric power (PIₘₐₓ) that the power supply (104) is capable of delivering;
(S142) comparing an instantaneous electric power (PI) consumed by the pumps with said instantaneous power threshold value (PI_{s max}), and,
(S143) if the electric power (PI) consumed by the pumps (23A, 23B) exceeds said instantaneous power threshold value (PI_{s max}), setting the filtered thrust setpoint (PGCc _{f}) to a value strictly lower than said initial thrust setpoint (PGCc ᵢₙᵢ); and
the second of said two groups of operations comprising the following operations:
(S145) calculating a predicted amount of consumed electrical energy (En_{cons prev}), equal to a cumulative amount of electrical energy to be supplied to the pumps in order to achieve a predicted thrust profile predicted for the rocket engine;
(S146) calculating the stored energy threshold value (EN_{s sto}) as a function of an amount of energy (Enₛₜₒ) stored in the power supply (104) ;
(S147) comparing the predicted amount of consumed electrical energy (En_{cons prev}) with the stored energy threshold value (EN_{s sto});
(S148) if it is detected that the predicted amount of consumed electrical energy (En_{cons prev}) is greater than the stored energy threshold value (EN_{s sto}), setting the filtered thrust setpoint (PGCc _{f}) to value strictly lower than said initial thrust setpoint (PGCc ᵢₙᵢ).

5. A computer program including instructions for executing the steps of the thrust management method according to any one of claims 1 to 4 when said program is executed by a computer.

6. A computer-readable recording medium on which a computer program according to claim 5 is recorded.

7. A control device (U) for a rocket engine (100), the rocket engine comprising a combustion chamber (102), two propellant supply circuits (20A, 20B) to supply the combustion chamber (102) with propellants, two pumps (23A, 23B) disposed respectively on the two propellant supply circuits, at least one of which being an electric pump, and a power supply (104);
said at least one electric pump (23A, 23B) being configured to be electrically powered by the power supply (104);
the control device comprising:
an initial thrust setpoint calculation module (U10) configured to calculate an initial thrust setpoint for the engine (PGCc ᵢₙᵢ);
an initial maximum thrust setpoint calculation module (U20) configured to calculate an initial maximum thrust setpoint (PGCc_{max ini}) desired for the engine;
an effective maximum thrust setpoint calculation module (U30) configured to calculate an effective maximum thrust setpoint (PGCc_{max e}) defining a maximum thrust expected from the engine given at least one limitation of the power supply (104);
the effective maximum thrust setpoint calculation module (U30) being configured to carry out at least one of two groups of operations (S31, S32, S33; S35, S36, S37, S38);
a filtered thrust setpoint calculation module (U40) configured to calculate, from the initial thrust setpoint (PGCc ᵢₙᵢ), a filtered thrust setpoint (PGCc _{f}) for the engine (100) such that the filtered thrust setpoint (PGCc _{f}) is lower than or equal to the effective maximum thrust setpoint (PGCC_{max e}) ;
the filtered thrust setpoint (PGCc _{f}) being a value provided to allow a calculation of the command(s) transmitted to said at least one electric pump;
the first of said two groups of operations comprising the following operations:
(S31) setting an instantaneous power threshold value (PI_{s max}) to a value strictly lower than a maximum electric power (PIₘₐₓ) that the power supply (104) is capable of delivering;
(S32) comparing an instantaneous electric power (PI) consumed by the pumps with said instantaneous power threshold value (PI_{s max}), and,
(S33) if the electric power (PI) consumed by the pumps (23A, 23B) exceeds said instantaneous power threshold value (PI_{s max}), setting the effective maximum thrust setpoint (PGCc_{max e}) to a value strictly lower than said initial maximum thrust setpoint (PGCc_{max ini})
the second of said two groups of operations comprising the following operations:
(S35) calculating a predicted amount of consumed electrical energy (En_{cons prev}), equal to a cumulative amount of electrical energy to be supplied to the pumps in order to achieve a predicted thrust profile predicted for the rocket engine ;
(S36) calculating a stored energy threshold value (EN_{s sto}) as a function of an amount of energy (Enₛₜₒ) stored in the power supply (104);
(S37) comparing the predicted amount of consumed electrical energy (En_{cons prev}) with the stored energy threshold value (EN_{s sto});
(S38) if it is detected that the predicted amount of consumed electrical energy (En_{cons prev}) is greater than the stored energy threshold value (EN_{s sto}), setting the effective maximum thrust setpoint (PGCc_{max e}) to a value strictly lower than said initial maximum thrust setpoint (PGCc_{max ini}).

8. A control device (U) for a rocket engine (100), the rocket engine comprising a combustion chamber (102), two propellant supply circuits (20A, 20B) to supply the combustion chamber (102) with propellants, two pumps (23A, 23B) disposed respectively on the two fuel supply circuits, at least one of which being an electric pump, and a power supply (104);
said at least one electric pump (23A, 23B) being configured to be electrically powered by the power supply (104);
the control device comprising:
an initial thrust setpoint calculation module (U10) configured to calculate an initial thrust setpoint for the engine (PGCc ᵢₙᵢ)
a filtered thrust setpoint calculation module (U40) configured to calculate, from the initial thrust setpoint (PGCc ᵢₙᵢ), a filtered thrust setpoint (PGCc _{f}) for the engine (100) by carrying out at least one among two groups of operations;
the filtered thrust setpoint (PGCc _{f}) being a value provided to allow a calculation of the command(s) transmitted to said at least one electric pump;
the first of said two groups of operations (S141, S142, S143) comprising the following operations:
(S141) calculating an instantaneous power threshold value (PI_{s max}) as a function of the maximum electric power (PIₘₐₓ) that the power supply (104) is capable of delivering;
(S142) comparing an instantaneous electric power (PI) consumed by the pumps with said instantaneous power threshold value (PI_{s max}), and,
(S143) if the electric power (PI) consumed by the pumps (23A, 23B) exceeds said instantaneous power threshold value (PI_{s max}), setting the filtered thrust setpoint (PGCc _{f}) to a value strictly lower than said initial thrust setpoint (PGCc ᵢₙᵢ) ; and
the second of said two groups of operations (S145, S146, S147, S148) comprising the following operations:
(S145) calculating a predicted amount of consumed electrical energy (En_{cons prev}), equal to a cumulative amount of electrical energy to be supplied to the pumps in order to achieve a predicted thrust profile predicted for the rocket engine;
(S146) calculating a stored energy threshold value (EN_{s sto}) as a function of an amount of energy (Enₛₜₒ) stored in the power supply (104);
(S147) comparing the predicted amount of consumed electrical energy (En_{cons prev}) with the stored energy threshold value (EN_{s sto});
(S148) if it is detected that the predicted amount of consumed electrical energy (En_{cons prev}) is greater than the stored energy threshold value (EN_{s sto}), setting the filtered thrust setpoint (PGCc _{f}) to a value strictly lower than said initial thrust setpoint (PGCc ᵢₙᵢ).

9. A rocket engine (100) comprising a combustion chamber (102), two propellant supply circuits (20A, 20B) to supply the combustion chamber (102) with propellants, two pumps (23A, 23B) disposed respectively on the two propellant supply circuits, at least one of which being an electric pump, and a power supply (104);
said at least one electric pump (23A, 23B) being configured to be electrically powered by the power supply (104); and
a control device (U) according to any one of claims 7 or 8.
